# EUROPEAN PATENT APPLICATION

(11) **EP 4 789 729 A1**
(43) Date of publication of application: **12.08.2026**
(21) Application number: 25156464.7
(22) Date of filing: 07.02.2025
(51) Int. Cl.: A62C 3/08, A62C 99/00, H01M 8/2475, B64D 27/355, B64D 27/357, B64D 41/00, B60K 15/03, B64D 45/00

(54) **SAFETY DEVICE, VEHICLE COMPONENT EQUIPPED THEREWITH AND AIRCRAFT**

(71) Applicant: Airbus S.A.S., 31700 Blagnac (FR)
(72) Inventor: Bammer, Benedikt, 82024 Taufkirchen (DE)
(74) Representative: OTN Airbus SAS

(57) **Abstract**

The invention relates to a safety device (10) for an equipment (18) containing potentially flammable and/or potentially explosive media, such as for example a fuel cell (42). The safety device (10) comprises a housing (12) with an internal chamber (20) for encapsulating the equipment. In order to improve the safety device (10) for use on vehicles, especially aircraft, the safety device (10) further comprises a flexible membrane (53) separating a gas-tight volume (55) from the chamber (20) wherein the gas-tight volume (55) is filled during operation with a filling gas (56) differing from the media. In preferred embodiments, the flexible membrane (53) is provided in form of a balloon (54) filled with the filling gas (56) and located within the chamber (20), especially in a top portion (84) of the chamber (20).

## Description

The invention relates to a safety device for an equipment containing potentially flammable and/or potentially explosive media. Especially, the invention relates to a safety device having a housing for enclosing an equipment working with a potentially flammable medium, such as hydrogen. Still further, the invention relates to a vehicle component comprising such an equipment and/or such a safety device. In preferred embodiments, the vehicle component is an aircraft component or in other words a component of an aircraft. Finally, the invention relates to an aircraft having such a vehicle component.

Preferred embodiments refer to safety devices for a fuel cell unit or other equipment operated with hydrogen.

Reference is made to the following literature:
[1] EP 4 296 158 A1
[1] describes an aircraft powered at least partially with hydrogen wherein a variable fairing is provided for venting the space around a hydrogen duct installation.

Some embodiments of the invention aim at solutions to enhance safety measures, especially for handling hydrogen on aircrafts or on other vehicles.

An object of the invention is to provide a new safety device which is improved for use on aircraft or similar vehicles.

For achieving such object, the invention provides a safety device according to claim 1. A vehicle component and an aircraft comprising such a safety device are subject-matters of the further independent claims.

Advantageous embodiments are subject-matters of the dependent claims.

The invention provides according to a first aspect thereof a safety device for an equipment containing potentially flammable and/or potentially explosive media, the safety device comprising:
a housing with an internal chamber for encapsulating the equipment and
a flexible membrane separating a gas tight volume from the chamber wherein the gas tight volume is filled during operation with a filling gas differing from the media.

In preferred embodiments, the membrane is (part of) a balloon configured to be filled with a filling gas differing from the media, wherein the balloon is configured to occupy at least a part of the remaining space of the chamber within the housing.

In some embodiments, the chamber is gas tightly closed. In some embodiments, the chamber is passively vented. In some embodiments, the chamber is actively vented.

In some embodiments, the gas tight volume separated by the membrane is arranged at the top of the chamber. In some embodiments, the gas tight volume separated by the membrane is filled with an inert or non-flammable gas. In some embodiments, the gas tight volume separated by the membrane is filled with a gas chosen from the group consisting of nitrogen, CO2, noble gas, helium, argon, krypton. In some embodiments, the membrane is or has an expandable skin configured to be damaged when exposed to fire or flames.

In some embodiments, the balloon is arranged at the top of the chamber. In some embodiments, the balloon is filled with an inert or non-flammable gas. In some embodiments, the balloon is filled with a gas chosen from the group consisting of nitrogen, CO2, noble gas, helium, argon, krypton. In some embodiments, the balloon has an expandable skin configured to be damaged when exposed to fire or flames.

According to a further aspect, the invention provides a vehicle component, especially an aircraft component, comprising a safety device according to any of the preceding embodiments and an equipment containing potentially flammable and/or potentially explosive media, wherein the equipment is arranged in a portion of the internal chamber, wherein the flexible membrane separates the gas-tight volume from the further portion of the chamber, wherein the gas-tight volume is filled with the filling gas.

In some embodiments, where the membrane is provided in the form of a balloon, the balloon filled with the filling gas is arranged in the further portion or in a remaining space of the chamber.

In some embodiments, the equipment is arranged in a lower portion of the chamber and the balloon is arranged in a top portion of the chamber.

In some embodiments, the equipment comprises at least one of a hydrogen duct installation, a hydrogen receptacle, a hydrogen duct, a fuel cell, and a battery.

In some embodiments, the housing is actively vented. In some embodiments, the housing is passively ventilated. In some embodiments, the housing is pressurized. In some embodiments, the housing is inerted (i.e. contains an inert gas within the chamber, also outside of the ballon). In some embodiments, the housing is fireproof. In some embodiments, the housing is an explosion tight safe housing.

In some embodiments, the balloon is filled such that it occupies the (full) remaining space of the internal chamber. In some embodiments, the balloon is filled such that it occupies only a part of the remaining space of the internal chamber wherein another part of the remaining space is left free for ventilation. In some embodiments, the balloon is only partly filled; e.g., the ballon is filled to an extent lying between 10% and 90% of its maximum volume.

According to another aspect, the invention provides an aircraft comprising a vehicle component according to any of the aforementioned embodiments.

In some embodiments, the aircraft has a propulsion system comprising a propulsion element such as a propeller or a fan, an electric motor for driving the propulsion element and at least one energy source for supplying the electric motor with electrical energy, wherein the at least one energy source is arranged and encapsulated within the housing of the safety device and wherein the gas-tight volume separated by the membrane and filled with filling gas, especially inert gas, occupies at least a part of the remaining space within the encapsulation of the housing. In preferred embodiments, where the flexible membrane is provided in form of the balloon, the balloon filled with filling gas, especially inert gas, occupies at least a part of the remaining space within the encapsulation of the housing.

In some embodiments, the at least one energy source is or comprises at least one fuel cell, especially a hydrogen powered fuel cell.

Thus, in preferred embodiments, the aircraft comprises an electric propulsion system, wherein the equipment is or comprises a fuel cell for supplying the electric propulsion system.

Some embodiments of the invention relate to a H2 safety device. Especially, the safety device is configured such that a potential explosion of a gas mixture is confined within a safe space within a housing of the safety device.

Embodiments of the invention are especially useful for a fuel cell supplied electric propulsion system for aircraft, e.g. for aircraft of a conventional form (e.g. fixed wings aircraft, helicopters, ...). Embodiments of the invention are helpful to ensure a safe flight by using power from fuel cells. However, the safety device of the invention is also useful for other hydrogen equipment or other equipment containing potentially flammable and/or potentially explosive media.

Conventionally, fuel cells are enclosed in fuel cell housings. The fuel cell housings may be open or ventilated. The fuel cell housings also may be closed.

One idea is to use a balloon filled with a gas, which reduces the space in a housing or encapsulation for an equipment containing potentially flammable and/or potentially explosive media (e.g. a fuel cell housing), to reduce the area where leaking media (e.g. leaking hydrogen) can diffuse.

In preferred embodiments, the balloon is filled with non-flammable gas. **In** case of fire, the balloon will burst and the non-flammable gas, e.g. nitrogen, can reduce the concentration of the medium (e.g. hydrogen) in the housing, which leads to an extinguishing of the fire.

In some embodiments, the balloon could decrease the peak pressures of an explosion in the housing.

There is no need to provide a full balloon which encloses the filling gas on all sides; it is sufficient that the space of the safe housing or safe chamber where the equipment is enclosed is bordered, preferably on top, by a flexible membrane which separates a further gas volume filled with the filling gas from this space. On all other sides, the further gas volume can be bordered,e.g. by the walls of the housing.

Preferred embodiments of the invention provide a lightweight and easy solution which can be used in actively or passively ventilated housings or in closed housings of hydrogen equipment (such as fuel cells) or of other equipment containing potentially flammable or potentially explosive media.

Some embodiments of the invention relate to a safety balloon for a fuel cell housing.

According to a further aspect, the invention provides use of a safety balloon in a fuel cell housing. All the optional features of the preferred embodiments of the safety device, the vehicle component, and the aircraft may also be optional features of the use of the safety balloon.

Preferred embodiments of the invention provide at least one, several or all of the following advantages:
- the space in the encapsulation where the potentially flammable or potentially explosive medium can diffuse and propagate is reduced
- the membrane/balloon may reduce the peak pressure which occurs during an explosion
- Lightweight solution
- Simple and cost saving
- Gas-tight volume (e.g. balloon) can be filled with different gas
- Could be in combination with an active or passive ventilated housing
- Could also be possible with a pressurized or inerted housing
- Easy disassembly of the stacks (Foam instead of the membrane/balloon could be a problem here)
- The flexible and thin skin of the membrane/balloon would be formed around the geometry like a layer or a vail
- The gas-tight volume/balloon can be filled to any extent, does mean there is no need to fill up the whole space. A little space can still be left for ventilation in the housing.

Embodiments of the invention are explained below referring to the accompanying drawings in which:
- Fig. 1: a schematic side view, partly broken away, of an aircraft as example for a vehicle with several aircraft components (examples for vehicle components) for illustrating preferred uses of a new safety device;
- Fig. 2: a sectional view along the section line II-II in Fig. 1 through one of the aircraft components of the aircraft, showing a safety device according to a first embodiment and an equipment enclosed therein;
- Fig. 3: a sectional view along the section line II-II in Fig. 1 through one of the aircraft components of the aircraft, showing a safety device according to a second embodiment and an equipment enclosed therein; and
- Fig. 4: a sectional view along the section line II-II in Fig. 1 through one of the aircraft components of the aircraft, showing a safety device according to a third embodiment.

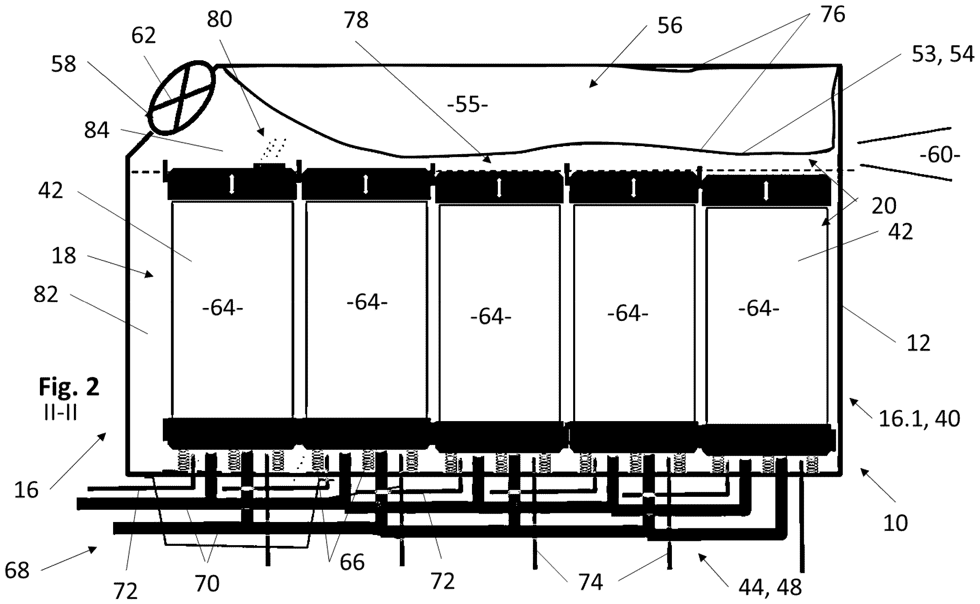

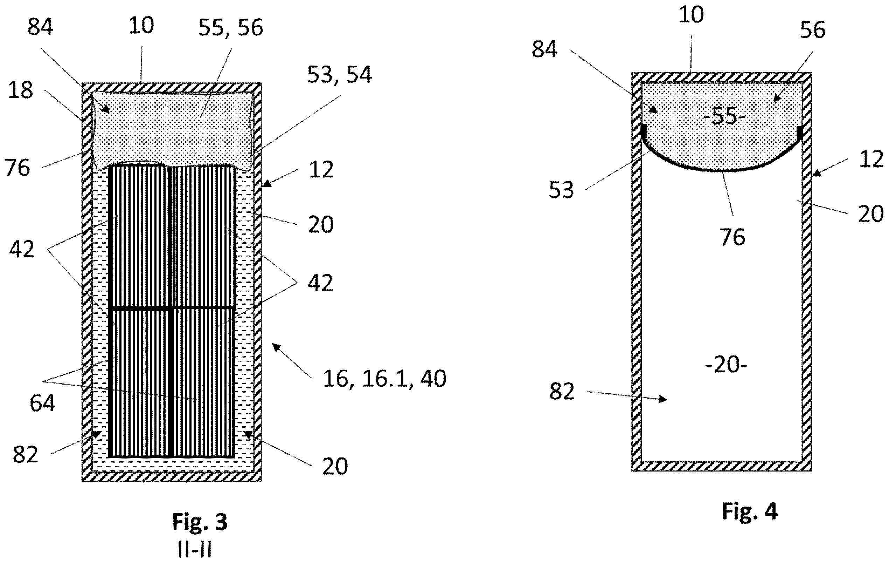

In the following, preferred embodiments and preferred uses of a safety device 10 for protection against mechanical impacts or bursts are explained in more detail with reference to the accompanying drawings. Schematic views of the safety device 10 according to different embodiments with an equipment 18 enclosed therein are shown in Figs. 2, and 3. A schematic view of a further embodiment of the safety device 10 is shown in Fig. 4. While the safety device 10 will be described on way of example for use together with a fuel cell unit for an aircraft 14, the safety device 10 could be used for many different purposes, especially those where a good, reliable and long-lasting protection for vehicle equipment containing possible harmful media shall be provided and where weight is an issue, such as different uses in vehicles, aircrafts or other aeronautic fields.

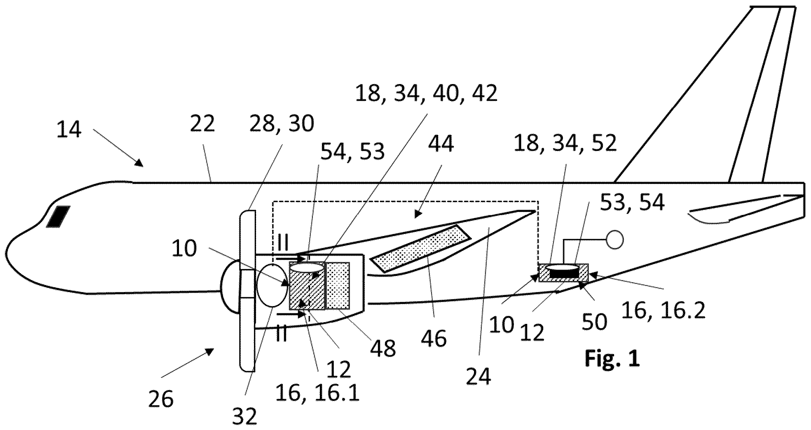

A possible embodiment of the aircraft 14 is shown in Fig. 1. Fig. 2 shows a first example of a component 16 of the aircraft 14 wherein equipment 18 is enclosed in a housing 12 of the safety device 10. Figs. 3 and 4 show further possible embodiments of the safety device 10 with another design of the housing 12.

Fig. 1 shows an electrically and/or hydrogen powered aircraft 14 with a fuselage 22 (e.g. with a passenger and/or cargo cabin), wings 24 and a propulsion system 26, especially an electrically or hydrogen driven propulsion system 26. In the embodiment shown, the propulsion system is an electrical propulsion system 26. The electric propulsion system 26 comprises a propulsion element 28 such as a propeller 30 or a fan, an electric motor 32 for driving the propulsion element 28 and at least one energy source 34 for supplying the electric motor 32 with electrical energy. In other embodiments of the aircraft (not shown), the propulsion system 26 comprises an internal combustion engine (e.g. a turbine) configured to burn hydrogen.

Several components 16 of the aircraft 14, e.g. components 16 containing one of the energy sources 34 and/or components 16 for processing, handling, ducting, and/or storing hydrogen, include equipment 18 enclosed in a safe housing 12. In the embodiment shown, a first component 16.1 is a fuel cell unit 40 containing several fuel cells 42 to be provided with hydrogen from a hydrogen supply 44. The hydrogen supply 44 includes a hydrogen tank 46 and a hydrogen distribution device 48 for a controlled distribution of hydrogen to the several fuel cells 42. A second component 16.2 is a battery unit 50 containing at least one battery 52 enclosed in the safe housing 12. In the second component 16.2, the safe housing 12 is configured as a battery housing.

The safety device 10 is configured to protect an equipment 18 containing potentially flammable and/or potentially explosive media. The safety device 10 comprises the housing 12 with an internal chamber 20 for encapsulating the equipment 18 and a flexible membrane 53 separating a gas-tight volume 55 from the chamber 20 wherein the gas-tight volume 55 is filled, at least during operation, with a filling gas 56 differing from the media. In preferred embodiments, the flexible membrane is provided in form of a balloon 54 configured to be filled with the filling gas 56 differing from the media. The balloon 54 is configured to fill at least a part of the remaining space of the chamber 20.

In the embodiment of Fig. 2, the housing 12 has an air inlet 58 and an air outlet 60 so that the chamber 20 is vented. In some embodiments (not shown), the chamber 20 is passively vented. In the embodiment as shown in Fig. 2, the chamber 20 is actively vented by means of a venting fan 62.

The chamber 20 encloses several fuel cells 42, here arranged in several fuel cell stacks 64. The fuel cell stacks 64 are arranged in a lower portion 82 of the chamber 20. The fuel cell stacks 64 and/or the fuel cells 42 in the fuel stacks 64 may be clamped by clamping elements such as springs 66. The fuel cell stacks 64 are supplied by means of a media supply 68 with hydrogen ducts 70, air ducts 72 and coolant ducts 74, and optionally purge ducts, exhaust ducts and/or outlet ducts (not shown). In preferred embodiments, the ducts of the media supply 68 are led through a bottom of the housing 12.

The balloon 54 is arranged in the top portion of the chamber 20. The balloon 54 has a skin 76 made from expandable thin material such as rubber or the like. The material of the skin is chosen such that the skin 76 can withstand normal operation conditions such as normal operation temperatures and pressures within the fuel cell unit 40 but will be destroyed in case of fire, for example by melting the skin material or by burning the skin material.

The balloon 54 is filled with the filling gas 56 which is preferably a non-flammable or inert gas such as nitrogen, CO2 or a noble gas. In some embodiments, the balloon 54 is filled before, during or after the mounting of the fuel cell unit 40 within the housing 12 and is then closed so that the balloon 54 is permanently filled. In some embodiments, the balloon 54 is connected to a filling duct so that the amount and pressure of the filling gas may be adjusted. At least, the balloon 54 is filled during operation of the fuel cell unit 40.

In some embodiments, the filled balloon 54 occupies only a part of the top portion of the chamber 20 above the fuel cell stacks 64 so that a free space 78 is left for ventilation, and leaking hydrogen 80 may be led out of the housing 12.

In some embodiments, the balloon 54 is only partly filled, e.g. between 10% and 90% of its maximum filling capacity.

The embodiment of Fig. 3 corresponds to the embodiment of Fig. 2 with the difference that the housing 12 is not vented but gas tightly closed and may be pressurized. In some embodiments, the chamber 20 is inerted, i.e. filled with an inert gas. Fig. 3 just shows a schematic view where the media supply 68 has been omitted in the drawing for illustrative purposes only. In the embodiment of Fig. 3, the balloon 54 occupies all of the top portion of the chamber 20 above the fuel cell stacks 62.

Fig. 4 schematically shows a further embodiment of the safety device with the housing 10 enclosing the internal safety chamber 20. A lower portion 82 of the safety chamber 20 is configured to enclose the equipment 18 which is not shown in Fig. 4. The top portion 84 of the chamber 20 is separated from this lower portion 82 by the flexible membrane 53 so that the gas-tight volume 55 filled with the filling gas 56 is defined above the membrane 53 and bounded by the upper parts of the housing 12. The membrane 53 is made from the balloon skin material as described above. The margins of the membrane 53 are fixed in a gas-tightly manner to the interior of the housing 12.

In the following, the function and advantages of preferred embodiments of the safety device 10 are explained in more detail.

In an electric driven propulsion system where the power is coming from fuel cells 42 there are several provisions to keep such a system safe.

Main issue is the hydrogen gas 80, which is easy to ignite and would result in a fire or detonation.

Due to this potential danger, such systems are encapsulated (in the housing 12). It does not matter if such an encapsulation is (actively/passively) vented or not. The fuel cell stacks 64 may be arranged in a tight housing 12 and whole systems could be in a big box to protect the system against mechanical impact, carry the system and keep the hydrogen gas 80 isolated to other systems or the environment around.

There is always a small "normal" leakage of H2, but a failure case like a big leakage due to a damage has to be considered as well.

For this reason, boxes of prior solutions are quite heavy to sustain the fire or the pressure by detonation/explosion.

Fire or detonation/explosion could occur with an H2 concentration of min. 4% to 80%. Furthermore, the density of hydrogen gas is less than air. Due to this the hydrogen would always get to the top.

Therefore, in preferred embodiments the safety balloon 54/membrane 53 is arranged also at the top of the housing 12.

The safety device 10 according to preferred embodiments of the invention uses the membrane 53/balloon 54 inside of such safety housing 12 or safety encapsulation. The membrane 53/balloon 54 reduces the space where the H2 gas 80 can diffuse and propagate.

Furthermore, in some embodiments, the membrane53/balloon 54 reduces the peak pressure which occurs during an explosion.

In some embodiments, the balloon 54 (or the gas-tight volume 55 separated by the membrane 53) is filled with an inert gas such as nitrogen. This has the following further advantage. If at a certain H2 concentration the air hydrogen mixture will ignite and burn, the membrane 53/balloon 54 could be damaged quite quickly and the inert gas (e.g. nitrogen) which pours out would reduce the H2 concentration immediately and would smother the fire.

While the safety device 10 has been explained by way of example for use in relation to fuel cell, it can also be used for other equipment 18 containing potentially flammable or explosive media.

Preferred embodiments of the invention relate to a safety device (10) for an equipment (18) containing potentially flammable and/or potentially explosive media, such as for example a fuel cell (42). The safety device (10) comprises a housing (12) with an internal chamber (20) for encapsulating the equipment. In order to improve the safety device (10) for use on vehicles, especially aircraft, the safety device (10) further comprises a flexible membrane (53) separating a gas-tight volume (55) from the chamber (20) wherein the gas-tight volume (55) is filled during operation with a filling gas (56) differing from the media. In preferred embodiments, the flexible membrane (53) is provided in form of a balloon (54) filled with the filling gas (56) and located within the chamber (20), especially in a top portion (84) of the chamber (20).

### Reference sign list:

- 10: safety device
- 12: housing
- 14: aircraft
- 16: component
- 16.1: first component
- 16.2: second component
- 18: equipment
- 20: chamber
- 22: fuselage
- 24: wing
- 26: propulsion system
- 28: propulsion element
- 30: propeller
- 32: electric motor
- 34: energy source
- 40: fuel cell unit
- 42: fuel cell
- 44: hydrogen supply
- 46: hydrogen tank
- 48: hydrogen distribution device
- 50: battery unit
- 52: battery
- 53: membrane
- 54: balloon
- 55: gas-tight volume
- 56: filling gas
- 58: air inlet
- 60: air outlet
- 62: venting fan
- 64: fuel cell stack
- 66: spring
- 68: media supply
- 70: hydrogen duct
- 72: air duct
- 74: coolant duct
- 76: skin
- 78: free space
- 80: leaking hydrogen
- 82: lower portion
- 84: top portion

## Claims

1. Safety device (10) for an equipment (18) containing potentially flammable and/or potentially explosive media, the safety device (10) comprising a housing (12) with an internal chamber (20) for encapsulating the equipment and a flexible membrane (53) separating a gas-tight volume (55) from the chamber (20) wherein the gas-tight volume (55) is filled during operation with a filling gas (56) differing from the media.

2. Safety device (10) according to claim 1, wherein the membrane (53) is a balloon (54) configured to be filled with the filling gas (56), wherein the balloon (54) occupies at least a part of the chamber (20).

3. Safety device (10) according to claim 1 or 2, wherein the chamber (20)
3.1 is gas-tightly closed or
3.2 is passively vented or
3.3 is actively vented.

4. Safety device (10) according to any of the preceding claims, wherein the gas-tight volume (55)
4.1 is arranged at the top of the chamber (20), and/or
4.2 is filled with an inert or non-flammable gas, and/or
4.3 is filled with a gas (56) chosen from the group consisting of nitrogen, CO2, noble gas, helium, argon, krypton.

5. Safety device (10) according to any of the preceding claims, wherein the membrane (54) or the balloon (54) has an expandable skin (76) configured to be damaged when exposed to fire or flames.

6. Vehicle component (16) comprising
a safety device (10) according to any of the preceding claims and
an equipment (18) containing potentially flammable and/or potentially explosive media, the equipment (18) being arranged in a portion of the internal chamber (20) separated by the flexible membrane (53) from the gas-tight volume (55), wherein the gas-tight volume (55) is filled with the filling gas (56).

7. Vehicle component (16) according to claim 6 with a safety device (10) according to claim 2, wherein the equipment (18) is arranged in a portion of the internal chamber (20), and wherein the balloon (54) filled with the filling gas (56) is arranged in a further portion or in a remaining space of the chamber (20).

8. Vehicle component (16) according to claim 7, wherein the equipment is arranged in a lower portion of the chamber (20) and the balloon (54) is arranged in a top portion of the chamber (20).

9. Vehicle component (16) according to any of the claims 7 or 8, wherein the balloon (54)
9.1 is filled such that it occupies the remaining space of the internal chamber (20) or
9.2 is filled such that it occupies only a part of the remaining space of the internal chamber (20) wherein another part of the remaining space is left free for ventilation;
9.3 is only partly filled.

10. Vehicle component (16) according to any of the claims 6 to 9, wherein the equipment (18) comprises at least one of a hydrogen duct installation, a hydrogen receptacle, a hydrogen duct, a fuel cell (42), and a battery (52).

11. Vehicle component (16) according to any of the claims 6 to 10, wherein the housing (12) is
11.1
a) actively or passively ventilated or
b) pressurized or
c) inerted
and/or
11.2 fireproof and/or
11.3 an explosion tight safe housing.

12. Aircraft (14) comprising a vehicle component (16) according to any of the claims 6 to 11 and/or a safety device (10) according to any of the claims 1 to 5.

13. Aircraft (14) according to claim 12, further comprising an electric propulsion system (26), wherein the equipment (18) is or comprises a fuel cell (42) for supplying the electric propulsion system (26).

14. Use of a safety balloon (54) in a fuel cell housing (12).
